# EUROPEAN PATENT SPECIFICATION

(11) **EP 2 447 565 B1**
(45) Date of publication and mention of the grant of the patent: **25.03.2020**
(21) Application number: 09846519.8
(22) Date of filing: 25.06.2009
(51) Int. Cl.: F16D 65/56, F16D 55/228

(54) **GAP ADJUSTMENT MECHANISM FOR DISK BRAKE DEVICE**
LÜFTSPALTVERSTELLMECHANISMUS FÜR EINE SCHEIBENBREMSENVORRICHTUNG
MÉCANISME D'AJUSTEMENT DE JEU POUR DISPOSITIF DE FREIN À DISQUE

(43) Date of publication of application: 02.05.2012
(73) Proprietor: TBK Co., Ltd., Machida-shi Tokyo 1940045 (JP)
(72) Inventor: OSAWA, Makoto, Machida-shi Tokyo 194-0045 (JP)
(74) Representative: Patentwerk B.V.
(86) International application number: PCT/JP2009/061638
(87) International publication number: WO 2010/150387

(56) References cited:
- EP-A2- 1 703 165
- WO-A1-2006/024511
- JP-A- 8 261 262
- JP-A- 2005 133 941
- JP-B- 51 042 278
- JP-T- 2006 501 413

## Description

### TECHNICAL FIELD

The present invention relates to a gap adjustment mechanism for a disk brake device, which automatically adjusts a gap between a disk rotor that rotates integrally with a vehicle wheel or the like and a friction pad.

### TECHINICAL BACKGROUND

Taking as an example a pneumatically operated disk brake device (to be referred to hereafter as an "air disk brake device") installed in a truck vehicle or the like, a floating caliper type air disk brake device including a disk rotor that rotates integrally with a vehicle wheel, a pair of friction pads (an inner pad and an outer pad) disposed opposite each other on either side of the disk rotor, and a caliper that is provided across an outer periphery of the disk rotor and supported to be free to slide in an axial direction of the disk rotor is known in the related art (see Patent Document 1, for example). In this air disk brake device, when the inner pad pushes the disk rotor, a corresponding reaction force causes the caliper, which supports the outer pad via a bridge, to slide to the disk rotor side such that the outer pad is also pushed against the disk rotor. Thus, a brake can be applied to rotation of the disk rotor by a resulting frictional force generated between the friction pads and the disk rotor.

In this floating type air disk brake device, a clearance is provided to allow the caliper to slide, and therefore the caliper may rattle when vibration is received from a road surface or the like during vehicle travel. Hence, a space for preventing interference with peripheral instruments and the like must be provided in accordance with the rattling. Further, a structure for suppressing vibration must be added and an overall rigidity of the disk brake device must be increased.

Therefore, demand exists for an air disk brake device having a fixed caliper. When a fixed caliper is employed, the aforementioned clearance need not be provided, enabling reductions in the overall size and weight of the disk brake device and effective use of a disposal space. When the caliper is fixed, it is difficult in terms of space to provide a drive source (an air chamber device, for example) for moving the respective friction pads to the disk rotor side on the two pads. Therefore, for example, the drive source is provided on only one of the friction pads (the inner pad), and the disk rotor is provided to be free to slide in the axial direction (toward the outer pad side) when pushed by the inner pad. As a result, a brake is applied to the disk rotor by sandwiching the disk rotor between the two friction pads.

### PRIOR ART

EP-1 703 165 discloses a gap adjustment mechanism for a disk brake device having a disk rotor provided to be free to rotate about a predetermined axis and to be free to slide in a direction of the predetermined axis, a first friction pad disposed on one surface side of the disk rotor in the predetermined axis direction with a first gap, a second friction pad disposed on another surface side of the disk rotor in the predetermined axis direction with a second gap, and pad driving means for pushing the first friction pad in the predetermined axis direction, the disk brake device generating a braking force by operating the pad driving means to move the first friction pad to the disk rotor side such that the first friction pad pushes the disk rotor in the predetermined axis direction while contacting the disk rotor until the disk rotor comes into contact with the second friction pad, whereby the disk rotor and the friction pads are frictionally engaged, the gap adjustment mechanism comprising first and second tappet members provided to be free to rotate respectively in only one rotation direction when the pad driving means is operated, a first piston member that is screwed to the first tappet member, provided in contact with the first friction pad so as to be incapable of rotating, and moved to the disk rotor side relative to the first tappet member when the first tappet member rotates; a second piston member that is screwed to the second tappet member, provided in contact with the second friction pad so as to be incapable of rotating, and moved to the disk rotor side relative to the second tappet member when the second tappet member rotates, a first adjustment mechanism that adjusts a gap formed between the first friction pad and the disk rotor due to wear on the first friction pad, and a second adjustment mechanism that adjusts a gap formed between the second friction pad and the disk rotor due to wear on the second friction pad.

Apart therefrom WO-2006/024511 (A) refers to a device without independent adjustment of both gaps.

### PROBLEMS TO BE SOLVED BY THE INVENTION

In this prior art device the adjustment mechanism is operated until the gap is more or less disappeared. This may lead to the problem that the gad is adjusted excessively, possibly leading to extra wear of the pads and possibly to extra development of heat by friction.

### MEANS TO SOLVE THE PROBLEMS

To solve the problem described above, the present invention provides a gap adjustment mechanism for a disk brake device of the kind referred to above wherein the first adjustment mechanism is adapted to displace the first piston member to the disk rotor side relative to the first tappet member until the first friction pad comes into contact with the disk rotor at a predetermined surface pressure after being displaced to the disk rotor side by an amount corresponding to the first gap, and wherein the second adjustment mechanism is adapted to displace the second piston member to the disk rotor side relative to the second tappet member until the disk rotor comes into contact with the second friction pad at a predetermined surface pressure after being displaced to the second friction pad side by an amount corresponding to the second gap.

Preferably the first adjustment mechanism in the gap adjustment mechanism includes tappet driving means for pushing the first tappet member in the predetermined axis direction such that the first tappet member and the first piston member are moved integrally to the disk rotor side and driving the first tappet member to rotate when the pad driving means is operated; a first transmission member that is disposed between the first tappet member and the tappet driving means in order to drive the first tappet member to rotate by transmitting a rotary driving force from the tappet driving means to the first tappet member, first adjusting means for performing an adjustment such that the rotary driving force from the tappet driving means is transmitted to the first transmission member after the first tappet member has been moved by the tappet driving means to the disk rotor side together with the first piston member by an amount corresponding to the first gap and a first clutch member that blocks transmission of the rotary driving force from the first transmission member to the first tappet member when the first piston member causes the first friction pad to contact the disk rotor at or above the predetermined surface pressure, and the second adjustment mechanism includes a second transmission member that transmits the rotary driving force of the first transmission member to the second tappet member, second adjusting means for performing an adjustment such that the rotary driving force of the first transmission member is transmitted to the second transmission member after the disk rotor has been pushed by the first friction pad to the second friction pad side by an amount corresponding to the second gap, and a second clutch member that blocks transmission of the rotary driving force from the second transmission member to the second tappet member when the first friction pad causes the disk rotor to contact the second friction pad at or above the predetermined surface pressure.

Even more preferably the first and second tappet members are provided to be free to rotate in only the one rotation direction by one-way clutches disposed respectively on the first and second transmission members.

### ADVANTAGEOUS EFFECTS OF THE INVENTION

With the gap adjustment mechanism for a disk brake device according to the present invention, when the friction pads become worn (in particular when the amounts of wear on the first friction pad and the second friction pad are different), gaps between the respective friction pads and the disk rotor can be adjusted automatically to appropriate gaps (the first and second gaps) in accordance with the respective amounts of wear. Therefore, the gaps between the respective friction pads and the disk rotor can be kept constant, and dragging of the friction pads due to excessive gap adjustment can be prevented. Further, with this constitution, the gap adjustment mechanism can also be applied to a fixed caliper type air disk brake device, which was considered difficult conventionally, enabling reductions in the overall size and weight of the disk brake device and effective use of a disposal space for the disk brake device.

Furthermore, according to the present invention, the gap adjustment mechanism can be constituted by mechanical structures alone, enabling a reduction in a number of components and an increase in structural simplicity. Moreover, in contrast to an electric gap adjustment device, the gap adjustment mechanism according to the present invention can be used in a high-temperature, high-vibration environment without a reduction in reliability. Furthermore, since an electric control system is not required, reductions in manufacturing cost and the overall amount of space taken up by the device can be achieved.

### BRIEF DESCRIPTION OF THE DRAWINGS

Fig. 1 is a side sectional view of a disk brake device to which a gap adjustment mechanism according to an embodiment of the present invention is applied;
Fig. 2 is a front view of the disk brake device;
Fig. 3 is a sectional view taken along an arrow V-V in Fig. 1;
Fig. 4 is a schematic constitutional diagram of the gap adjustment mechanism;
Fig. 5 is a view illustrating a pin engagement hole of a first wheel; and
Fig. 6 is a view illustrating a pin engagement hole of a second wheel.

### DESCRIPTION OF THE EMBODIMENTS

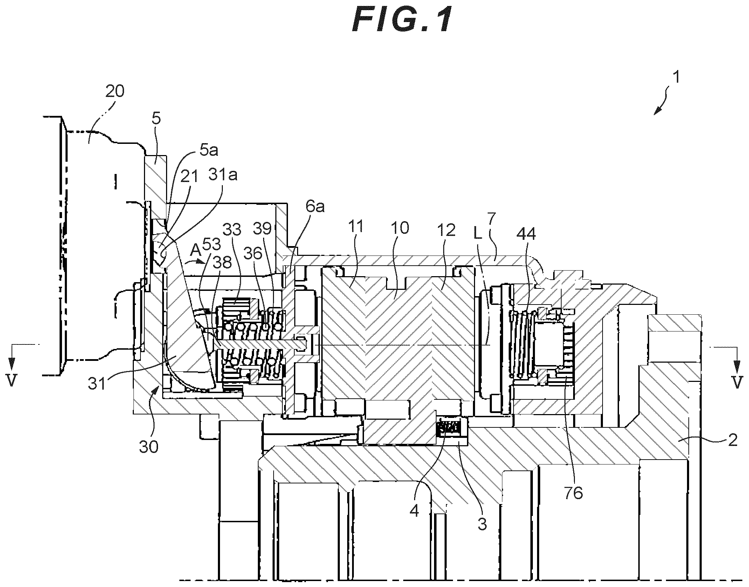

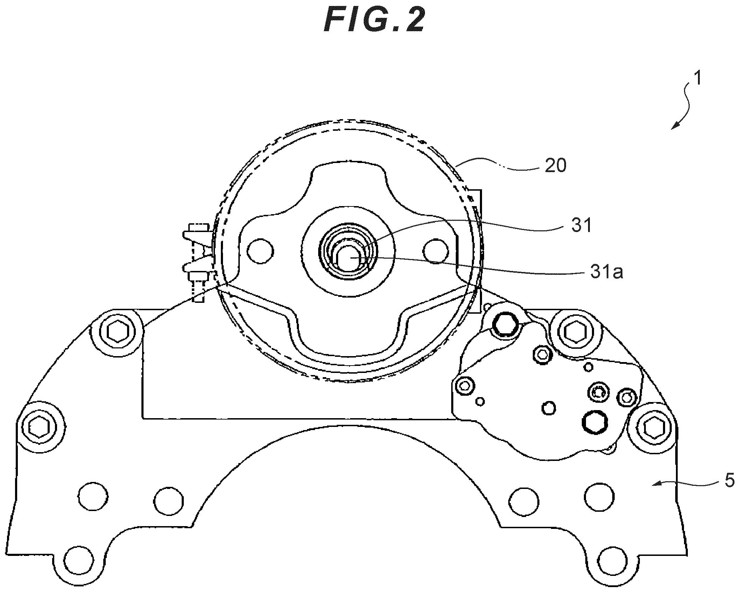

A preferred embodiment of the present invention will be described below with reference to the drawings. Figs. 1 to 3 show a disk brake device 1 to which a gap adjustment mechanism according to an embodiment of the present invention is applied. First, an outline of the constitution of the disk brake device 1 will be described with reference to these drawings.

The disk brake device 1 includes a disk-shaped disk rotor 10 that rotates integrally with a vehicle wheel (not shown) of a truck vehicle, a pair of friction pads (an inner pad 11 and an outer pad 12) disposed opposite each other on either side of the disk rotor 10, an air chamber 20 including a push rod 21 that is capable of advancing and retreating, and a pad pushing mechanism 30 that applies a brake to rotation of the disk rotor 10 by pushing the friction pads 11, 12 against sliding surfaces of the disk rotor 10 when the air chamber 20 is activated.

The disk rotor 10 is fitted into a spline groove 3, which is formed in a hub 2 that supports the vehicle wheel rotatably, to be free to slide in an axial direction (a direction of an axis L), and is biased to the inner pad 11 side at all times by a coil spring 4 supported on the hub 2.

Each friction pads 11, 12 is constituted by a lining that frictionally contacts the sliding surfaces of the disk rotor 10, and a metallic back plate for holding a back surface side (a surface side that does not contact the disk rotor 10) of the lining. Note that the friction pads 11, 12 and the disk rotor 10 are covered from above by a retainer plate 7.

The air chamber 20 is a pneumatic diaphragm type cylinder capable of causing the push rod 21 to advance and retreat by causing a diaphragm to expand and thereby displace in accordance with air pressure that is supplied to a pressure chamber thereof in response to a brake operation by a driver. Further, the air chamber 20 is attached to a caliper housing 5 fixed to a vehicle body such that the push rod 21 of the air chamber 20 is connected to an operating shaft 31 of the pushing mechanism 30 via an insertion hole 5a opened in the caliper housing 5. The insertion hole 5a is formed with a larger diameter than an outer diameter of the push rod 21 to allow the push rod 21 to oscillate.

The pad pushing mechanism 30 is constituted by the operating shaft 31, a roller 32, an inner tappet 33, an inner piston 34, a return spring 36, an intermediate plate 37, a guide rod 38, an inner spring 39, and so on, and moves the inner pad 11 in a direction for coming into contact with the disk rotor 10 in accordance with an expansion motion of the push rod 21 within the air chamber 20.

The operating shaft 31 is configured to be free to turn about a central axis extending in an orthogonal direction to the paper surface of Fig. 1 in accordance with the advancing/retreating motion of the push rod 21, and an indented portion 31a that can be contacted by a tip end portion of the push rod 21 is formed in a substantially recessed shape on a base end side thereof. Further, the operating shaft 31 has a pair of eccentric wheels 31b on respective flank portions thereof, and as the operating shaft 31 turns in an A direction (a brake activating direction) shown in Fig. 1, the eccentric wheels 31b push the inner tappet 33 in a parallel direction to the axis L via the cylindrical roller 32.

The inner tappet 33 is formed by integrating a base portion 33a that contacts an outer peripheral portion of the roller 32, a cylindrical portion 33b that extends in an axial direction from the base portion 33a, and a gear portion 33c that projects from the base portion 33a outwardly in a radial direction. A multi-thread male screw portion is formed on an outer periphery of the cylindrical portion 33b.

The inner piston 34 is constituted by a crown portion 34a that contacts the inner pad 11, and a piston portion 34b having a multi-thread female screw portion that can be screwed to the male screw portion of the inner tappet 33 formed in an insertion hole opened on one end side thereof. The crown portion 34a is attached to another end side of the piston portion 34b to be free to oscillate. The male screw portion of the inner tappet 33 and the female screw portion of the inner piston 34 together constitute a first screw mechanism 35. Further, the inner piston 34 is supported on an inner piston housing 6a via a cylindrical bush 8a such that when the inner piston 34 is pushed by the roller 32 and so on, a resulting axial direction movement thereof is guided via the bush 8a.

One end portion of the return spring 36 is supported by the inner piston housing 6a, and another end portion is supported by the flat plate-shaped intermediate plate 37. The return spring 36 thus biases the operating shaft 31 in a direction (a brake releasing direction) for returning to an initial position at all times via the intermediate plate 37. One end portion of the guide rod 38 is fitted to the intermediate plate 37, and another end portion of the guide rod 38 is inserted into a guide hole 6b formed in the inner piston housing 6a. Thus, a rectilinear motion of the intermediate plate 37 when sandwiched between the return spring 36 and the roller 32 is guided by the guide rod 38 and so on.

Further, a flat plate-shaped retainer plate 26 is provided on an end portion of the gear portion 33c on an inner one of a pair of the inner tappets 33. One end portion of the inner spring 39 is supported by the inner piston housing 6a, while another end portion is supported by the retainer plate 26. Hence, the gear portion 33c of the inner tappet 33 is biased at all times to the roller 32 side by an urging force of the inner spring 39 via the retainer plate 26, whereby the base portion 33a of the inner tappet 33 remains in constant contact with an outer peripheral surface of the roller 32.

In the disk brake device 1 constituted as described above, when the air chamber 20 is pressurized (when braking air is supplied) in accordance with a brake operation, the push rod 21 is operated to expand such that the operating shaft 31 turns in the brake activating direction (a positive rotation direction A in Fig. 1). When the roller 32 is pushed out to the inner tappet 33 side by the turning motion of the operating shaft 31, the inner tappet 33 is pushed to the disk rotor 10 side integrally with the inner piston 34 against the biasing force of the inner spring 39. Accordingly, the inner pad 11 also moves to the disk rotor 10 side. When the inner pad 11 has been displaced to the disk rotor 10 side by an amount corresponding to an appropriate gap amount (an initially set gap amount) between the inner pad 11 and the disk rotor 10, the lining of the inner pad 11 contacts one of the sliding surfaces of the disk rotor 10 at a predetermined surface pressure.

When the operating shaft 31 is turned further, the inner pad 11 pushes the disk rotor 10 to the outer pad 12 side against a biasing force of the coil spring 4, and when the disk rotor 10 has been displaced to the outer pad 12 side by an amount corresponding to an appropriate gap between the disk rotor 10 and the outer pad 12, the outer pad 12 contacts the disk rotor 10 at a predetermined surface pressure. Hence, by sandwiching the disk rotor 10 between the friction pads 11, 12, a brake can be applied to a rotation operation thereof, and as a result, a predetermined brake action can be obtained.

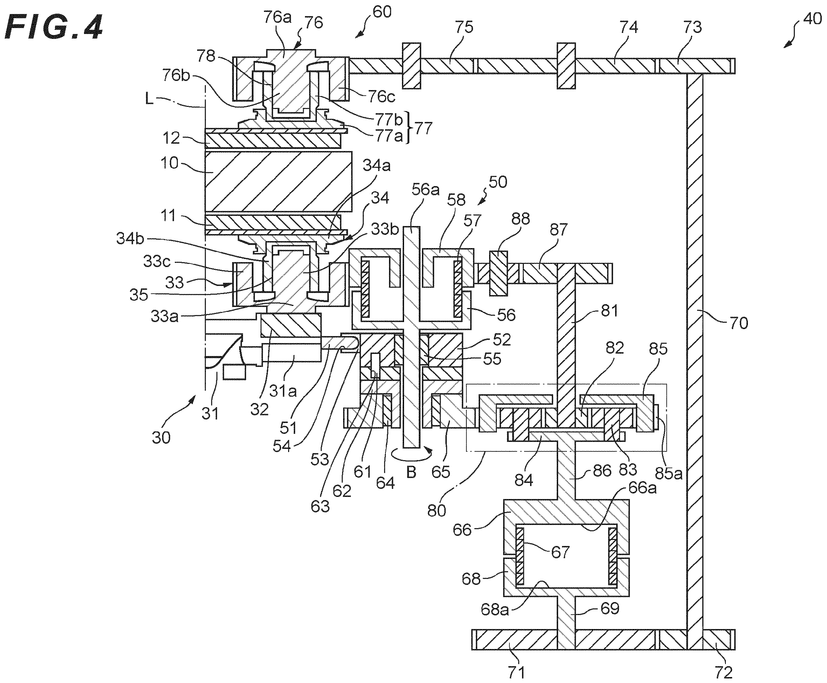

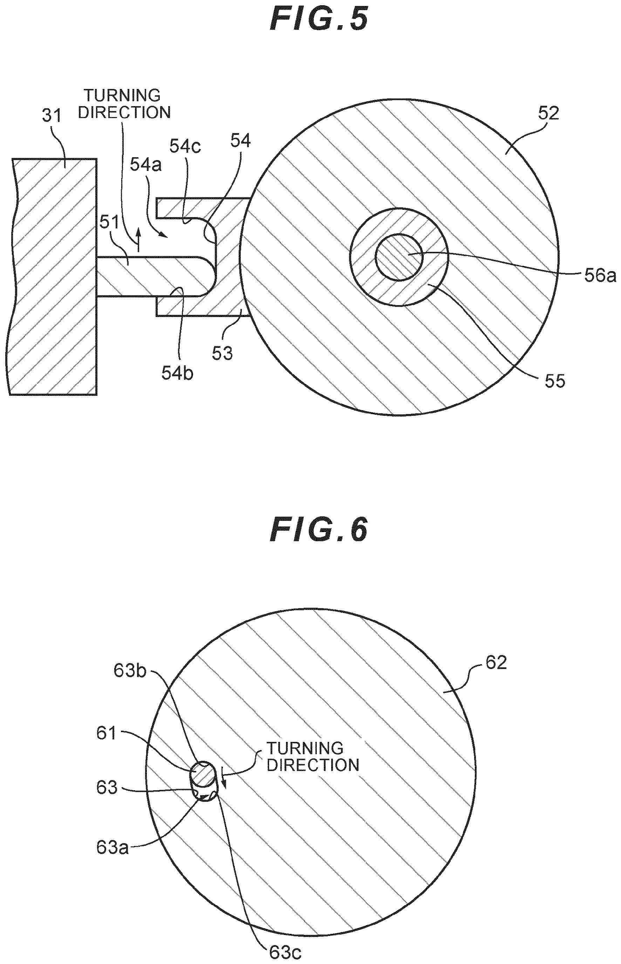

When wear occurs on the respective friction pads 11, 12 at this time, the respective gaps between the friction pads 11, 12 and the disk rotor 10 increase, leading to an increase in an amount by which the respective friction pads 11, 12 move in order to apply a predetermined brake pressure. Therefore, a gap adjustment mechanism 40 for automatically adjusting the gaps between the disk rotor 10 and the friction pads 11, 12 to optimum gaps (initially set gaps) by automatically adjusting respective positions of the friction pads 11, 12 relative to the disk rotor 10 is installed in the disk brake device 1. The constitution of the gap adjustment mechanism 40 will now be described with additional reference to Figs. 4 to 6.

The gap adjustment mechanism 40 is constituted by an inner adjustment mechanism 50 for adjusting the gap between the inner pad 11 and the disk rotor 10, an outer adjustment mechanism 60 for adjusting the gap between the outer pad 12 and the disk rotor 10, and a planetary gear mechanism 80 for connecting the two adjustment mechanisms 50, 60.

The inner adjustment mechanism 50 is mainly constituted by a first pin 51, a first wheel 52, an inner one-way clutch 55, an inner primary wheel 56, an inner rigidity canceling clutch 57, an inner secondary wheel 58, the inner tappet 33, and the inner piston 34.

One end portion of the first pin 51 is inserted into and fitted to an outer peripheral surface of the operating shaft 31 such that the first pin 51 turns integrally with the operating shaft 31. Another end portion of the first pin 51 is inserted into a pin engagement hole 54 of a connecting portion 53 formed integrally with an outer peripheral portion of the first wheel 52. Thus, when the first pin 51 pushes the connecting portion 53 (an inside wall 54c of the pin engagement hole 54) in accordance with the turning motion of the operating shaft 31, the first wheel 52 rotates.

The pin engagement hole 54 is formed to extend by a predetermined length in a turning direction of the first pin 51 such that when the operating shaft 31 is in an initial position (a brake releasing position), the other end portion of the first pin 51 is positioned on a bottom wall 54b of the pin engagement hole 54. A clearance portion 54a is formed in the pin engagement hole 54 on an opposite side to the first pin 51 when the first pin 51 is in contact with the bottom wall 54b, and a length of the clearance portion 54a corresponds to an optimum gap between the inner pad 11 and the disk rotor 10 in a condition where no wear has occurred on the inner pad 11. Hence, a timing at which the first wheel 52 is rotated can be delayed relative to a point at which the operating shaft 31 starts to turn by an amount of time required for the first pin 51 to move through the pin engagement hole 54 from the bottom wall 54b and come into contact with the inside wall (a wall surface opposing the bottom wall) 54c.

The inner primary wheel 56 is engaged to the first wheel 52 via the inner one-way clutch 55. More specifically, the inner one-way clutch 55, which transmits only a rotary force generated in the positive rotation direction (a B direction in Fig. 4) of the first wheel 52, is interposed between an inner peripheral surface of the first wheel 52 and a rotary shaft portion 56a of the inner primary wheel 56.

Further, the inner rigidity canceling clutch 57, which is constituted by a friction clutch or the like, is fixed to the inner primary wheel 56, and by frictionally engaging the inner secondary wheel 58 and the inner rigidity canceling clutch 57, the inner primary wheel 56 and the inner secondary wheel 58 can rotate integrally.

A gear externally meshed to the inner tappet 33 is provided on an outer peripheral portion of the inner secondary wheel 58 such that as the inner secondary wheel 58 rotates, the inner tappet 33 rotates while contacting the roller 32.

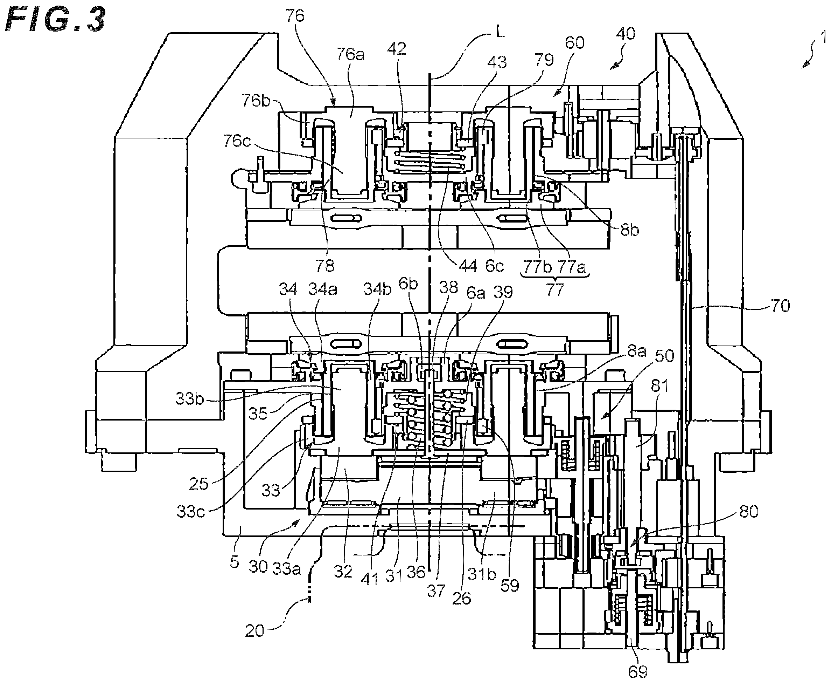

The pair of inner tappets 33 are coupled by being externally meshed respectively to an inner coupling gear 41 disposed between the inner tappets 33. Thus, a rotary driving force of the inner tappet 33 (a right side inner tappet 33 in Fig. 3) that meshes with the inner secondary wheel 58 can be transmitted to the other inner tappet 33 (a left side inner tappet 33 in Fig. 3) via the inner coupling gear 41.

As described above, the inner tappet 33 and the inner piston 34 include the first screw mechanism 35, and the inner piston 34 is keyed (fixed non-rotationally) to the inner piston housing 6a to be incapable of rotating by a key 59. Hence, when the inner tappet 33 rotates, a rotary motion of the inner tappet 33 is converted into a rectilinear motion by the first screw mechanism 35 and so on, whereby the inner piston 34 performs a rectilinear motion to the disk rotor 10 side relative to the inner tappet 33.

According to the inner adjustment mechanism 50 having this constitution, when the inner pad 11 becomes worn such that the gap between the disk rotor 10 and the inner pad 11 becomes larger than the appropriate gap, the first pin 51 rotates the first wheel 52 via the pin engagement hole 54 at a point where the inner pad 11 has moved to the disk rotor 10 side by an amount corresponding to the appropriate gap in accordance with the turning motion of the operating shaft 31. A resulting rotary driving force is transmitted to the inner primary wheel 56, the inner secondary wheel 58, and the inner tappet 33, in that order, and as a result, the inner piston 34 can be moved to the disk rotor 10 side relative to the inner tappet 33. When the inner piston 34 has moved relative to the inner tappet 33 by an amount corresponding to the amount of wear on the inner pad 11, the inner pad 11 contacts the disk rotor 10 at a predetermined surface pressure. At this time, a rotary load (a rotary torque) of the inner secondary wheel 58 increases in accordance with a frictional force between the inner pad 11 and the disk rotor 10, and as the rotary load increases, the inner rigidity canceling clutch 57 is disengaged. Accordingly, the inner tappet 33 stops rotating such that the relative movement of the inner piston 34 is stopped, and thus gap adjustment between the disk rotor 10 and the inner pad 11 is complete.

Meanwhile, the planetary gear mechanism 80 is constituted by a sun gear 82 supported to be capable of rotating integrally with a first input shaft 81, a plurality of planetary gears 83 that mesh with the sun gear 82, a carrier 84 that supports the planetary gears 83 rotatably and is capable of rotating integrally with an output shaft 86, and a substantially tubular ring gear (a second input shaft) 85 that meshes with the planetary gears 83 and is supported to be capable of rotating about an axis of the first input shaft 81 and the output shaft 86. Note that axes of the first input shaft 81, second input shaft 85, and output shaft 86 are substantially collinear.

A first input shaft gear 87 is attached to an end portion (an end portion on an opposite side to the sun gear 82) of the first input shaft 81, and the first input shaft gear 87 is disposed to mesh with an intermediate gear 88 that is externally meshed to the inner secondary wheel 58. Hence, the rotation of the inner secondary wheel 58 is transmitted to the first input shaft 81 via the intermediate gear 88, and in accordance therewith, the sun gear 82 rotates integrally with the first input shaft 81.

Therefore, when the inner secondary wheel 58 rotates together with the inner primary wheel 56 (in other words, when the inner rigidity canceling clutch 57 is connected), the sun gear 82 rotates in an identical direction (the B direction in Fig. 4) to the inner secondary wheel 58 via the intermediate gear 88. When the inner rigidity canceling clutch 57 is disengaged such that the inner secondary wheel 58 stops rotating, on the other hand, the intermediate gear 88 and the sun gear 82 also stop rotating.

The outer adjustment mechanism 60 includes a second pin 61, one end portion of which is inserted into the first wheel 52, a second wheel 62 that is engaged to the first wheel 52 by the second pin 61, and a second wheel gear 65 that engages with the second wheel 62 via an outer one-way clutch 64. The second wheel gear 65 is externally meshed to a second input shaft gear 85a formed on an outer periphery of the ring gear (second input shaft) 85. The outer one-way clutch 64 is interposed between the second wheel 62 and the second wheel gear 65 so as to transmit only a rotary force generated in a positive rotation direction (the B direction in Fig. 4) of the second wheel 62 to the second wheel gear 65. Therefore, the ring gear 85 rotates in an opposite direction to the first wheel 52 via the second pin 61, the second wheel gear 65, and so on as the first wheel 52 rotates.

Further, another end portion of the second pin 61, which projects outwardly from the first wheel 52, is inserted into a pin engagement hole 63 formed in the second wheel 62. The pin engagement hole 63 is formed to extend by a predetermined length in a turning direction (a circumferential direction) of the second pin 61 such that when the first wheel 52 is in an initial position (a position where an operation by the inner adjustment mechanism 50 starts), the other end portion of the second pin 61 is positioned on one side wall 63b of the pin engagement hole 63.

A clearance portion 63a is formed in the pin engagement hole 63 on an opposite side to the second pin 61 when the second pin 61 is in contact with the one side wall 63b, and a length of the clearance portion 63a corresponds to an optimum gap between the outer pad 12 and the disk rotor 10 in a condition where no wear has occurred on the outer pad 12. Hence, a timing at which the second wheel 62 is rotated can be delayed relative to the point at which the first wheel 52 starts to rotate by an amount of time required for the second pin 61 to move through the pin engagement hole 63 from the one side wall 63b and come into contact with another side wall (a wall surface opposing the one side wall) 63c.

Further, when the inner adjustment mechanism 50 is activated to adjust the gap between the disk rotor 10 and the inner pad 11 to the appropriate gap, as described above, the planetary gear mechanism 80 ensures that the outer adjustment mechanism 60 is not activated by preventing a rotary driving force from the side of the input shafts 81, 85 from being transmitted to the output shaft 86.

More specifically, in the planetary gear mechanism 80, when a number of teeth of the sun gear 82 is set at Za = 18 and a number of teeth of the ring gear 85 is set at Zb = 48, for example, and a speed ratio (a rotation ratio) i of the ring gear 85 relative to the sun gear 82 is aligned with a reduction ratio Za/Zb (= -3/8) between the respective numbers of teeth Za, Zb such that the inner rigidity canceling clutch 57 is connected, causing the sun gear 82 and the ring gear 85 to rotate in mutually opposite directions, rotation of the carrier 84 can be stopped (in other words, rotation of the output shaft 86 can be stopped). Note that at this time, the rotation directions of the sun gear 82 and the ring gear 85 are mutually opposite, as noted above, and therefore a value of the reduction ratio is negative (-).

By setting a number of teeth of the inner secondary wheel 58 at Zc = 28 and a number of teeth of the first input shaft gear 87 at Zd = 21 at this time, for example, the rotation of the first wheel 52 is transmitted to the sun gear 82 after being reduced at a reduction ratio i₁ = Zc/Zd (= 4/3).

Meanwhile, by setting a number of teeth of the second wheel 65 at Ze = 20 and a number of teeth of the second input shaft gear 85a at Zf = 40, for example, the rotation of the first wheel 52 is transmitted to the ring gear 85 after being reduced at a reduction ratio i₂ = Ze/Zf (=-1/2).

Hence, the reduction ratio i of the ring gear 85 relative to the sun gear 82 becomes i = i₂/i₁ = -3/8, and thereby matches the aforesaid reduction ratio Za/Zb = -3/8. Therefore, by rotating the sun gear 82 and the ring gear 85 in mutually opposite directions under this condition, the planetary gears 83 rotate but do not revolve, and as a result, the rotation of the output shaft 86 connected integrally to the carrier 84 can be stopped. Note that the numbers of teeth, reduction ratios, and so on of the respective gears cited here may be modified appropriately.

When the inner rigidity canceling clutch 57 is disengaged while the operating shaft 31 turns, on the other hand, the inner secondary wheel 58 stops rotating so as to stop rotating the sun gear 82, whereas the first wheel 52 continues rotating so as to continue to rotate the ring gear 85. In this case, this differential motion in the planetary gear mechanism 80 causes the planetary gears 83 to revolve while rotating on the sun gear 82, whereby the carrier 84 starts to rotate, and as a result, the output shaft 86 connected integrally to the carrier 84 can be rotated at a predetermined reduction ratio.

The outer adjustment mechanism 60 includes, in addition to the second pin 61 and so on described above, an outer primary wheel 66, an outer secondary wheel 68, first to fifth outer tappet driving gears 71 to 75, a transmission shaft 70, an outer tappet 76, an outer piston 77, and so on.

The outer primary wheel 66 is formed in a substantially closed-end cylindrical shape and connected integrally to an end portion (an end portion on an opposite side to the carrier 84) of the output shaft 86. The outer primary wheel 66 thus rotates integrally with the output shaft 86 about a central axis thereof. The outer primary wheel 66 and the outer secondary wheel 68 respectively include cylindrical opening portions 66a, 68a, and by disposing the outer primary wheel 66 and the outer secondary wheel 68 such that the opening portions 66a, 68a face each other, the opening portions 66a, 68a form a disposal space for an outer rigidity canceling clutch 67 constituted by a friction clutch or the like.

The inner rigidity canceling clutch 67 is fixed to the outer primary wheel 66 in the opening portion 66a, and by frictionally engaging the inner secondary wheel 68 and the inner rigidity canceling clutch 67, the inner primary wheel 66 and the inner secondary wheel 68 can rotate integrally.

The first outer tappet driving gear 71 is connected to a rotary shaft 69 of the outer secondary wheel 68 so as to rotate integrally with the outer secondary wheel 68. The second outer tappet driving gear 72 is externally meshed to the first outer tappet driving gear 71.

The transmission shaft 70 is an elongated rod extending parallel to the axis L direction, one end portion of which is joined to the second outer tappet driving gear 72 and another end portion of which is joined to the third outer tappet driving gear 73. The fourth driving gear 74 meshes with the third outer tappet driving gear 73 and on a substantially opposite side meshes with the fifth outer tappet driving gear 75, whereby a rotary driving force of the third outer tappet driving gear 73 is transmitted to the fifth outer tappet driving gear 75.

The outer tappet 76 is formed by integrating a cylindrical portion 76b that extends in an axial direction from a base portion 76a, and a gear portion 76c that projects from the base portion 76a outwardly in a radial direction. A male screw portion is formed on an outer periphery of the cylindrical portion 76b.

The outer piston 77 is constituted by a crown portion 77a that presses the outer pad 12, and a piston portion 77b having a multi-thread female screw portion that can be screwed to the male screw portion of the outer tappet 76 formed in an insertion hole opened on one end side thereof. The crown portion 77a is attached to another end side of the piston portion 77b to be free to oscillate. The male screw portion of the outer tappet 76 and the female screw portion of the outer piston 77 together constitute a second screw mechanism 78. Further, the outer piston 77 is supported on an outer piston housing 6c via a cylindrical bush 8b such that a relative movement of the outer piston 77 relative to the outer tappet 76 is guided by the bush 8b.

A pair of the outer tappets 76 are coupled by being externally meshed respectively to an outer coupling gear 42 disposed between the outer tappets 76. Thus, a rotary driving force of the outer tappet 76 (a right side outer tappet 76 in Fig. 3) that meshes with the fifth outer tappet driving gear 75 can be transmitted to the other outer tappet 76 (a left side outer tappet 76 in Fig. 3) via the outer coupling gear 42.

As described above, the outer tappet 76 and the outer piston 77 are screwed to each other, and the outer piston 77 is keyed (fixed non-rotationally) to the outer piston housing 6c to be incapable of rotating by a key 79. Hence, when the outer tappet 76 rotates, a rotary motion of the outer tappet 76 is converted into a rectilinear motion by the second screw mechanism 78 and so on, whereby the outer piston 77 performs a rectilinear motion to the disk rotor 10 side relative to the outer tappet 76.

Further, a flat plate-shaped retainer plate 43 is provided on an end portion of the gear portion 76c on an inner one of the pair of outer tappets 76. One end portion of an outer spring 44 is supported by the outer piston housing 6c, while another end portion is supported by the retainer plate 43. Hence, the outer tappet 76 is retained by a biasing force of the outer spring 44, thereby preventing behavior (rattling) of the outer tappet 76 caused by vibration and the like from the vehicle body.

Next, an operation performed by the gap adjustment mechanism 40 provided in the disk brake device 1 having the above constitution when the friction pads 11, 12 become worn will be described. Note that an outline of a braking operation performed when the friction pads 11, 12 are not worn has already been described and will not therefore be described here.

First, when braking air is supplied to the air chamber 20 and pressurized therein in response to a predetermined brake operation, the push rod 21 performs an expansion differential movement, thereby causing the operating shaft 31 to turn in the positive rotation direction (the A direction in Fig. 1). In accordance with this turning motion, the eccentric wheels 31b formed integrally with the operating shaft 31 push the roller 32, whereby the inner tappet 33 and the inner piston 34 advance to the disk rotor 10 side while remaining integrated.

At this time, the first pin 51 turns integrally with the turning motion of the operating shaft 31, but since the clearance portion corresponding to the inner pad 11 side optimum gap amount is formed in the pin engagement hole 54 of the first wheel 52, the first pin 51 only moves within the pin engagement hole 54 at this time, and therefore the first wheel 52 does not rotate.

When the operating shaft continues to turn such that the inner piston 34 pushes the inner pad 11 to the disk rotor 10 side by an amount corresponding to the inner pad 11 side optimum gap amount (an original movement amount of the inner pad 11 when not worn), the first pin 51 impinge on the inside wall of the pin engagement hole 54 so as to push the connection portion 53 from the inside wall, and as a result, the first wheel 52 starts to rotate about its axis. Note that at this time, a gap corresponding to the amount of wear on the inner pad 11 remains between the inner pad 11 and the disk rotor 10.

When the first wheel 52 rotates, the resulting rotary driving force is transmitted to the inner primary wheel 56 via the inner one-way clutch 55, whereby the inner secondary wheel 58 that is frictionally engaged to the inner rigidity canceling clutch 57 is caused to rotate.

When the inner secondary wheel 58 rotates, the inner tappet 33 meshed thereto also starts to rotate. The inner piston 34 that is rotationally restricted by the key 59 is then caused to start moving relatively to the disk rotor 10 side by the first screw mechanism 35. At this time, the inner piston 34 is pushed by the roller 32 in accordance with the turning motion of the operating shaft 31 so as to advance while remaining integrated with the inner tappet 33. Meanwhile, the inner tappet 33 performs an independent relative advancing motion upon reception of an action of the first screw mechanism 35.

Further, the rotary driving force of the inner secondary wheel 58 is transmitted to the first input shaft gear 87 via the intermediate gear 88, whereby the first input shaft 81 and the sun gear 82, which are connected integrally thereto, start rotating in an identical direction to the first wheel 52. Meanwhile, when the first wheel 52 rotates, the second wheel 62 rotates via the second pin 61 and the second wheel gear 65 rotates via the outer one-way clutch 64, whereby the ring gear 85 meshed thereto rotates in an opposite direction (the B direction in Fig. 4) to the first wheel 52. Hence, the sun gear 82 and the ring gear 85 rotate in mutually opposite directions such that in the planetary gear mechanism 80, as described above, the planetary gears 83 rotate but do not revolve. As a result, the carrier 84 and the output shaft 86 are maintained in a nonrotating stationary condition. Therefore, while the inner rigidity canceling clutch 57 is connected such that the inner secondary wheel 58 rotates, the resulting rotary driving force is not transmitted to the output shaft 86. Hence, during an operation of the inner adjustment mechanism 50, activation of the outer adjustment mechanism 60 is restricted, and therefore excessive gap adjustment exceeding the original amount of wear is prevented from being performed on the outer pad 12 side.

When the inner pad 11 has been displaced by the pushing motion from the inner piston 34 to the disk rotor 10 side by a movement amount corresponding to the amount of wear thereon, the lining of the inner pad 11 contacts the sliding surface of the disk rotor 10 at a predetermined surface pressure.

A pushing force exerted on the disk rotor 10 by the inner pad 11 at this time causes the rotary load of the inner secondary wheel 58 to increase, and as a result, the inner rigidity canceling clutch 57 is disengaged. Accordingly, the inner secondary wheel 58 stops rotating such that the inner tappet 33 meshed thereto also stops rotating. As a result, the inner piston 34 stops moving relative to the inner tappet 33, and therefore excessive gap adjustment by the inner adjustment mechanism 50 is prevented. By causing the inner piston 34 to move (unscrew) to the disk rotor 10 side relative to the inner tappet 33 until the inner pad 11 contacts the disk rotor 10 at the predetermined surface pressure in this manner, the gap between the inner pad 11 and the disk rotor 10 caused by wear on the inner pad 11 can be partially adjusted.

Thereafter, the inner rigidity canceling shaft 57 remains disengaged, and therefore, even if the operating shaft 31 is turned further, the inner piston 34 does not move independently relative to the inner tappet 33 any further and only moves in the axial direction integrally with the inner tappet 33 when pushed by the roller 32. When the inner piston 34 is pushed further toward the disk rotor 10, the disk rotor 10 is moved to the outer pad 12 side against the biasing force of the coil spring 4 such that the disk rotor 10 is displaced to the outer pad 12 side by an amount corresponding to the appropriate gap amount (an original movement amount when the outer pad 12 is not worn). As a result, adjustment of the gap on the outer pad 12 side is begun by the outer adjustment mechanism 60.

At this time, the inner rigidity canceling clutch 57 is disengaged, as noted above, and therefore rotary driving force is not transmitted to the sun gear 82 in accordance with the turning motion of the operating shaft 31. However, the first wheel 52 continues to rotate, and therefore the rotary driving force thereof is transmitted to the ring gear 85 via the second wheel gear 65 and so on.

At this time, in the planetary gear mechanism 80, the sun gear 82 is fixed and the ring gear 85 serving as the second input shaft rotates. Therefore, the planetary gears 83 both rotate and revolve such that the carrier 84 and the output shaft 86 can be rotated integrally.

Adjustment of the gap between the outer pad 12 and the disk rotor 10 is performed as the output shaft 86 rotates. However, rotation of the output shaft 86 is started on the basis of disengagement of the inner rigidity canceling clutch 57, and therefore, if gap adjustment is performed in relation to the outer pad 12 when (the clutch 57 is disengaged such that) the inner pad 11 pushes the disk rotor 10 to the outer pad 12 side, as described above, excessive gap adjustment exceeding the amount of wear on the outer pad 12 may be performed likewise on the outer pad 12 side.

However, the second wheel 62 is provided with the aforesaid pin engagement hole 63 corresponding to the optimum gap between the outer pad 12 and the disk rotor 10, and therefore the timing at which rotation of the output shaft 86 is started can be delayed by an amount corresponding thereto. Hence, in the gap adjustment mechanism 40, the disk rotor 10 can be moved to the outer pad 12 side by an amount corresponding to the optimum gap in accordance with the pushing motion from the inner pad 11, and once the disk rotor 10 has reached a position removed from the outer pad 12 by an amount corresponding to the wear thereon, gap adjustment can be performed on the outer pad 12 side by the outer adjustment mechanism 60.

When the output shaft 86 starts to rotate at this timing, the outer primary wheel 66 connected thereto rotates integrally with and in an identical direction to the output shaft 86. Accordingly, the outer secondary wheel 68 frictionally engaged to the outer rigidity canceling clutch 67 also starts to rotate such that the rotary driving force thereof is transmitted to the first outer tappet driving gear 71, the second outer tappet driving gear 72, the transmission shaft 70, the third outer tappet driving gear 73, the fourth outer tappet driving gear 74, and the fifth outer tappet driving gear 75, in that order. As a result, the outer tappet 76 meshed to the fifth outer tappet driving gear 75 also rotates.

Next, the outer piston 77 that is screwed to the outer tappet 76 and supported by the key 79 on the outer piston housing 6c to be incapable of rotating is caused to perform a rectilinear motion to the disk rotor 10 side by the rotation of the outer tappet 76, whereby the outer pad 12 connected thereto gradually approaches the disk rotor 10. When the outer pad 12 has been moved by an amount corresponding to the amount of wear on the outer pad 12 by the pushing motion from the outer piston 77, the lining of the outer pad 12 contacts the sliding surface of the disk rotor 10 at the predetermined surface pressure. As a result, the friction pads 11, 12 generate a braking force for applying a brake to the vehicle wheel by sandwiching the two sliding surfaces of the disk rotor 10 at an even surface pressure.

Note that in this condition, the outer rigidity canceling clutch 67 is disengaged when the rotary load (torque) exerted on the outer secondary wheel 68 increases due to the frictional force between the outer pad 12 and the disk rotor 10. As a result, the rotary driving force of the outer primary wheel 66 is blocked such that the outer secondary wheel 68 stops rotating. Accordingly, the outer tappet 76 also stops rotating, and therefore the relative movement of the outer piston 77 generated by the second screw mechanism 78 is also stopped such that the inner pad 11 is not pushed any further. Hence, in this case also, excessive gap adjustment by the outer adjustment mechanism 60 is prevented.

Thus, in the outer adjustment mechanism 60, the amount of wear on the outer pad 12 can be partially adjusted through the operation of the outer adjustment mechanism 60 by causing the outer piston 77 to move (unscrew) to the disk rotor 10 side relative to the outer tappet 76. Further, the operation of the outer adjustment mechanism 60 is begun once the inner pad 11 has moved by an amount corresponding to the optimum gap amount and the amount of wear so as to come into contact with the disk rotor 10 at the predetermined surface pressure, and therefore the operation is always synchronized with the operation of the disk rotor 10 and not affected by gap variation caused by wear on the inner pad 11. Hence, gap adjustment on the outer pad 12 side, which was conventionally considered difficult, can be improved in reliability.

When the air pressure supply to the pressure chamber of the air chamber 20 is canceled, the push rod 21 is operated to contract, and as a result, the operating shaft 31 is returned in a non-braking direction by a restoring force of the return spring 36. When the operating shaft 31 turns in the non-braking direction, the inner tappet 33 and the inner piston 34 are caused to retreat integrally to the operating shaft 31 side by a restoring force of the inner spring 39 while remaining in contact with the roller 32.

Meanwhile, the disk rotor 10 receives a restoring force from the coil spring 4 so as to move in a direction separating from the outer pad 12, and as a result, gaps are formed between the friction pads 11, 12 and the disk rotor 10 such that the braking force applied to the vehicle wheel is released.

Note that when the operating shaft 31 is turned in the non-braking direction in order to release the brake, neither of the adjustment mechanisms 50, 60 is activated, and the respective gaps between the friction pads 11, 12 and the disk rotor 10 are not returned to the pre-adjustment gaps. More specifically, in the inner adjustment mechanism 50, a rotary driving force transmitted from the operating shaft 31 to the first wheel 52 via the first pin 51 in the non-braking direction (an opposite rotation direction to the B direction in Fig. 4) is not transmitted to the inner primary wheel 56 by the inner one-way clutch 55 interposed between the first wheel 52 and the inner primary wheel 56, and no variation occurs in an axial direction relative positional relationship between the inner piston 34 and the inner tappet 33.

Similarly, in the outer adjustment mechanism 60, a rotary driving force transmitted to the first wheel 52 in the non-braking direction (the opposite rotation direction to the B direction in Fig. 4) is transmitted to the second pin 61 and the second wheel 62 but not transmitted to the second wheel gear 65 by the outer one-way clutch 64 interposed between the second wheel 62 and the second wheel gear 65, and no variation occurs in an axial direction relative positional relationship between the outer piston 77 and the outer tappet 76.

Hence, after the respective friction pads 11, 12 have been moved in a direction approaching the disk rotor 10 by an amount corresponding to movement amounts generated by the respective screw mechanisms 35, 78, from the amounts of wear on the friction pads 11, 12, the positions of the respective friction pads 11, 12 are maintained even when braking is not underway. Therefore, the positions of the moved friction pads 11, 12 can be used as starting positions during a subsequent braking operation.

The gap adjustment mechanism 40 is therefore capable of adjusting gaps corresponding to the relative movement amounts of the respective pistons 34, 77 generated by the screw mechanisms 35, 78, from the amounts of wear on the respective friction pads 11, 12, by activating the respective adjustment mechanisms 50, 60 a single time. Accordingly, when the braking operation is performed on the vehicle wheel a plurality of times, the entire amounts of wear on the respective friction pads 11, 12 can finally be adjusted.

With the gap adjustment mechanism 40 according to the embodiment described above, when the respective friction pads 11, 12 become worn, the gap adjustment mechanism 40 can automatically adjust the gaps between the respective friction pads 11, 12 and the disk rotor 10 to appropriate gaps in accordance with the amounts of wear thereon such that the gaps between the respective friction pads 11, 12 and the disk rotor 10 remain constant. Further, even when the amounts of wear on the inner pad 11 and the outer pad 12 are different, the gaps can be adjusted individually in accordance with the respective amounts of wear on the friction pads 11, 12 by connecting and disconnecting the inner adjustment mechanism 50 and the outer adjustment mechanism 60 appropriately using the planetary gear mechanism 80 and so on, and therefore dragging of the friction pads 11, 12 due to excessive gap adjustment or the like can be prevented.

Further, the gap adjustment mechanism 40 according to this embodiment can also be applied to a fixed caliper type air disk brake device, which was considered difficult conventionally, enabling reductions in the overall size and weight of the disk brake device and effective use of a disposal space for the disk brake device.

Furthermore, the gap adjustment mechanism 40 is constituted by mechanical structures alone, enabling a reduction in a number of components and an increase in structural simplicity. Moreover, in contrast to a constitution employed in an electric adjuster or the like, where a piston is operated by an electric motor and a rotor operation is detected by a non-contact type optical sensor, the gap adjustment mechanism 40 can be used in a high-temperature, high-vibration environment without a reduction in reliability. Furthermore, since electric control systems for sensor amplifiers and so on are not required, reductions in manufacturing cost and the overall amount of space taken up by the device can be achieved.

### EXPLANATION OF NUMERALS AND CHARACTERS

1 disk brake device
10 disk rotor
11 inner pad (first friction pad)
12 outer pad (second friction pad)
20 air chamber (pad driving means)
31 operating shaft (tappet driving means)
32 roller (tappet driving means)
33 inner tappet (first tappet member)
34 inner piston (first piston member)
40 gap adjustment mechanism
50 inner adjustment mechanism (first adjustment mechanism)
51 first pin (first transmission member)
52 first wheel (first transmission member)
54 pin engagement hole (first adjusting means)
55 inner one-way clutch (one-way clutch)
56 inner primary wheel (first transmission member)
57 inner rigidity canceling clutch (first clutch member)
58 inner secondary wheel (first transmission member)
60 outer adjustment mechanism (second adjustment mechanism)
61 second pin (second transmission member)
62 second wheel (second transmission member)
63 pin engagement hole (second adjusting means)
64 outer one-way clutch (one-way clutch)
66 outer primary wheel (second transmission member)
67 outer rigidity canceling clutch (second clutch member)
68 outer secondary wheel (second transmission member)
70 transmission shaft (second transmission member)
71 to 75outer tappet driving gears (second transmission member)
76 outer tappet (second tappet member)
77 outer piston (second piston member)
80 planetary gear mechanism (second adjustment mechanism, second transmission member, second adjusting means)

## Claims

1. A gap adjustment mechanism for a disk brake device (1) having a disk rotor (10) provided to be free to rotate about a predetermined axis and to be free to slide in a direction of the predetermined axis, a first friction pad (11) disposed on one surface side of the disk rotor (10) in the predetermined axis direction with a first gap, a second friction pad (12) disposed on another surface side of the disk rotor (10) in the predetermined axis direction with a second gap, and pad driving means (20) for pushing the first friction pad (11) in the predetermined axis direction, the disk brake device (1) generating a braking force by operating the pad driving means (20) to move the first friction pad (11) to the disk rotor (10) side such that the first friction pad (11) pushes the disk rotor (10) in the predetermined axis direction while contacting the disk rotor until the disk rotor comes into contact with the second friction pad (12), whereby the disk rotor (10) and the friction pads (11, 12) are frictionally engaged,
- the gap adjustment mechanism comprising:
- first and second tappet members (33, 76) provided to be free to rotate respectively in only one rotation direction when the pad driving means (20) is operated;
- a first piston member (34) that is screwed to the first tappet member (34), provided in contact with the first friction pad (11) so as to be incapable of rotating, and moved to the disk rotor (10) side relative to the first tappet member (33) when the first tappet member rotates;
- a second piston member (77) that is screwed to the second tappet member (76), provided in contact with the second friction pad (12) so as to be incapable of rotating, and moved to the disk rotor (10) side relative to the second tappet member (76) when the second tappet member rotates;
- a first adjustment mechanism (50) that adjusts a gap formed between the first friction pad (11) and the disk rotor (10) due to wear on the first friction pad (11); and
- a second adjustment mechanism (60) that adjusts a gap formed between the second friction pad (12) and the disk rotor (10) due to wear on the second friction pad (12),
**characterized in that,**
- the first adjustment mechanism (50) is adapted to displace the first piston member (34) to the disk rotor side relative to the first tappet member (33) until the first friction pad (11) comes into contact with the disk rotor (10) at a predetermined surface pressure after being displaced to the disk rotor side by an amount corresponding to the first gap, and that
- the second adjustment mechanism (60) is adapted to displace the second piston member (77) to the disk rotor side relative to the second tappet member (76) until the disk rotor (10) comes into contact with the second friction pad (12) at a predetermined surface pressure after being displaced to the second friction pad side by an amount corresponding to the second gap.

2. The gap adjustment mechanism according to claim 1, **characterized in that** the first adjustment mechanism (50) includes:
tappet driving means for pushing the first tappet member (33) in the predetermined axis direction such that the first tappet member (33) and the first piston member (34) are moved integrally to the disk rotor side and driving the first tappet member (33) to rotate when the pad driving means (20) is operated;
a first transmission member (51, 52) that is disposed between the first tappet member (33) and the tappet driving means (31) in order to drive the first tappet member (33) to rotate by transmitting a rotary driving force from the tappet driving means (31) to the first tappet member (33);
first adjusting means (54) for performing an adjustment such that the rotary driving force from the tappet driving means (31) is transmitted to the first transmission member (51, 52) after the first tappet member (33) has been moved by the tappet driving means (31) to the disk rotor side together with the first piston member (34) by an amount corresponding to the first gap; and
a first clutch member (57) that blocks transmission of the rotary driving force from the first transmission member (51, 52) to the first tappet member (34) when the first piston member (34) causes the first friction pad (11) to contact the disk rotor (10) at or above the predetermined surface pressure, and
the second adjustment mechanism (60) includes:
a second transmission member (61, 62) that transmits the rotary driving force of the first transmission member (51, 52) to the second tappet member (76);
second adjusting means (63) for performing an adjustment such that the rotary driving force of the first transmission member (51, 52) is transmitted to the second transmission member (61, 62) after the disk rotor (10) has been pushed by the first friction pad (11) to the second friction pad side by an amount corresponding to the second gap; and
a second clutch member (67) that blocks transmission of the rotary driving force from the second transmission member (61, 62) to the second tappet member (76) when the first friction pad (11) causes the disk rotor (10) to contact the second friction pad (12) at or above the predetermined surface pressure.

3. The gap adjustment mechanism according to claim 2, **characterized in that** the first and second tappet members (33, 76) are provided to be free to rotate in only the one rotation direction by one-way clutches (57, 67) disposed respectively on the first and second transmission members(51, 52; 61, 62).

## Patentansprüche

1. Luftspaltverstellmechanismus für eine Scheibenbremsenvorrichtung (1), die einen Scheibenrotor (10), der dafür vorgesehen ist, sich frei um eine festgelegte Achse zu drehen und sich frei in eine Richtung der festgelegten Achse zu verschieben, einen ersten Bremsbelag (11), der auf einer Flächenseite des Scheibenrotors (10) in der festgelegten Achsenrichtung mit einem ersten Luftspalt angeordnet ist, einen zweiten Bremsbelag (12), der auf einer anderen Flächenseite des Scheibenrotors (10) in der festgelegten Achsenrichtung mit einem zweiten Luftspalt angeordnet ist, und eine Belagantriebseinrichtung (20), um den ersten Bremsbelag (11) in der festgelegten Achsenrichtung zu verschieben, aufweist, wobei die Scheibenbremsenvorrichtung (1) eine Bremskraft erzeugt, indem die Belagantriebseinrichtung (20) betrieben wird, um den ersten Bremsbelag (11) zur Seite des Scheibenrotors (10) zu bewegen, sodass der erste Bremsbelag (11) den Scheibenrotor (10) beim Kontakt des Scheibenrotors in die festgelegte Achsenrichtung schiebt, bis der Scheibenrotor mit dem zweiten Bremsbelag (12) in Kontakt kommt, wobei der Scheibenrotor (10) und die Bremsbeläge (11, 12) reibschlüssig verbunden sind,
- wobei der Luftspaltverstellmechanismus Folgendes umfasst:
- ein erstes und zweites Stößelelement (33, 76), die dazu vorgesehen sind, sich jeweils nur in eine Drehrichtung frei zu drehen, wenn die Belagantriebseinrichtung (20) betrieben wird;
- ein erstes Kolbenelement (34), das auf das erste Stößelelement (34) geschraubt ist und mit dem ersten Bremsbelag (11) in Kontakt vorgesehen ist, sodass es sich nicht drehen kann, und in Bezug zum ersten Stößelelement (33) auf die Seite des Scheibenrotors (10) bewegt wird, wenn sich das erste Stößelelement dreht;
- ein zweites Kolbenelement (77), das auf das zweite Stößelelement (76) geschraubt ist und mit dem zweiten Bremsbelag (12) in Kontakt vorgesehen ist, sodass es sich nicht drehen kann, und in Bezug zum zweiten Stößelelement (76) auf die Seite des Scheibenrotors (10) bewegt wird, wenn sich das zweite Stößelelement dreht;
- einen ersten Verstellmechanismus (50), der einen aufgrund von Verschleiß am ersten Bremsbelag (11) zwischen dem ersten Bremsbelag (11) und dem Scheibenrotor (10) ausgebildeten Luftspalt verstellt; und
- einen zweiten Verstellmechanismus (60), der einen aufgrund von Verschleiß am zweiten Bremsbelag (12) zwischen dem zweiten Bremsbelag (12) und dem Scheibenrotor (10) ausgebildeten Luftspalt verstellt,
**dadurch gekennzeichnet, dass**
- der erste Verstellmechanismus (50) dazu eingerichtet ist, das erste Kolbenelement (34) im Verhältnis zum ersten Stößelelement (33) auf die Seite des Scheibenrotors zu verschieben, bis der erste Bremsbelag (11) bei einem festgelegten Oberflächendruck mit dem Scheibenrotor (10) in Kontakt kommt, nachdem er um einen Weg, der dem ersten Luftspalt entspricht, zur Seite des Scheibenrotors verschoben wurde, und dass
- der zweite Verstellmechanismus (60) dazu eingerichtet ist, das zweite Kolbenelement (77) im Verhältnis zum zweiten Stößelelement (76) auf die Seite des Scheibenrotors zu verschieben, bis der Scheibenrotor (10) bei einem festgelegten Oberflächendruck mit dem zweiten Bremsbelag (12) in Kontakt kommt, nachdem er um einen Weg, der dem zweiten Luftspalt entspricht, zur Seite des zweiten Bremsbelags verschoben wurde.

2. Luftspaltverstellmechanismus nach Anspruch 1, **dadurch gekennzeichnet, dass** der erste Verstellmechanismus (50) Folgendes enthält:
eine Stößelantriebseinrichtung, um das erste Stößelelement (33) in der festgelegten Achsenrichtung zu verschieben, sodass das erste Stößelelement (33) und das erste Kolbenelement (34) zusammen zur Seite des Scheibenrotors bewegt werden und das erste Stößelelement (33) antreiben, sich zu drehen, wenn die Belagantriebseinrichtung (20) betrieben wird;
ein erstes Getriebeelement (51, 52), das zwischen dem ersten Stößelelement (33) und der Stößelantriebseinrichtung (31) angeordnet ist, um das erste Stößelelement (33) anzutreiben, sich zu drehen, indem eine Drehantriebskraft von der Stößelantriebseinrichtung (31) zum ersten Stößelelement (33) übertragen wird;
eine erste Verstelleinrichtung (54) zum Durchführen eines Verstellens, sodass die Drehantriebskraft von der Stößelantriebseinrichtung (31) zum ersten Getriebeelement (51, 52) übertragen wird, nachdem das erste Stößelelement (33) zusammen mit dem ersten Kolbenelement (34) um einen Weg, der dem ersten Luftspalt entspricht, von der Stößelantriebseinrichtung (31) zur Seite des Scheibenrotors bewegt wurde; und
ein erstes Kupplungselement (57), das die Übertragung der Drehantriebskraft vom ersten Getriebeelement (51, 52) zum ersten Stößelelement (34) blockiert, wenn das erste Kolbenelement (34) bewirkt, dass der erste Bremsbelag (11) den Scheibenrotor (10) mit dem festgelegten Flächendruck oder mehr berührt, und
wobei der zweite Verstellmechanismus (60), Folgendes enthält:
ein zweites Getriebeelement (61, 62), das die Drehantriebskraft vom ersten Getriebeelement (51, 52) zum zweiten Stößelelement (76) überträgt;
eine zweite Verstelleinrichtung (63) zum Durchführen eines Verstellens, sodass die Drehantriebskraft vom ersten Getriebeelement (51, 52) zum zweiten Getriebeelement (61, 62) übertragen wird, nachdem der Scheibenrotor (10) vom ersten Bremsbelag (11) um einen Weg, der dem zweiten Luftspalt entspricht, zur Seite des zweiten Bremsbelags verschoben wurde; und
ein zweites Kupplungselement (67), das die Übertragung der Drehantriebskraft vom zweiten Getriebeelement (61, 62) zum zweiten Stößelelement (76) blockiert, wenn der erste Bremsbelag (11) bewirkt, dass der Scheibenrotor (10) den zweiten Bremsbelag (12) mit dem festgelegten Flächendruck oder mehr berührt.

3. Luftspaltverstellmechanismus nach Anspruch 2, **dadurch gekennzeichnet, dass** das erste und zweite Stößelelement (33, 76) durch Freilaufkupplungen (57, 67), die am ersten bzw. zweiten Getriebeelement (51, 52; 61, 62) angeordnet sind, vorgesehen sind, um sich frei nur in eine Drehrichtung zu drehen.

## Revendications

1. Mécanisme d'ajustement de jeu pour un dispositif de frein à disque (1) comportant un rotor à disque (10) agencé pour être libre de tourner autour d'un axe prédéterminé et pour être libre de coulisser dans une direction de l'axe prédéterminé, un premier patin de frottement (11) disposé sur un côté de surface du rotor à disque (10) dans la direction d'axe prédéterminé moyennant un premier jeu, un second patin de frottement (12) disposé sur un autre côté de surface du rotor à disque (10) dans la direction d'axe prédéterminé moyennant un second jeu, et des moyens d'entraînement de patin (20) destinés à pousser le premier patin de frottement (11) dans la direction d'axe prédéterminé, le dispositif de frein à disque (1) générant une force de freinage par l'activation des moyens d'entraînement de patin (20) pour déplacer le premier patin de frottement (11) vers le côté du rotor à disque (10) de sorte que le premier patin de frottement (11) pousse le rotor à disque (10) dans la direction d'axe prédéterminé tout en contactant le rotor à disque jusqu'à ce que le rotor à disque entre en contact avec le second patin de frottement (12), grâce à quoi le rotor à disque (10) et les patins de frottement (11, 12) sont en prise par frottement,
le mécanisme d'ajustement de jeu comprenant :
des premier et second éléments poussoirs (33, 76) agencés pour être libres de tourner respectivement dans une seule direction de rotation lorsque les moyens d'entraînement de patin (20) sont activés ;
un premier élément piston (34) qui est vissé au premier élément poussoir (34), placé en contact avec le premier patin de frottement (11) de façon à ne pas pouvoir tourner, et déplacé vers le côté de rotor à disque (10) par rapport au premier élément poussoir (33) lorsque le premier élément poussoir tourne ;
un second élément piston (77) qui est vissé au second élément poussoir (76), placé en contact avec le second patin de frottement (12) de façon à ne pas pouvoir tourner, et déplacé vers le côté de rotor à disque (10) par rapport au second élément poussoir (76) lorsque le second élément poussoir tourne ;
un premier mécanisme d'ajustement (50) qui ajuste un jeu formé entre le premier patin de frottement (11) et le rotor à disque (10) en raison de l'usure sur le premier patin de frottement (11) ; et
un second mécanisme d'ajustement (60) qui ajuste un jeu formé entre le second patin de frottement (12) et le rotor à disque (10) en raison de l'usure sur le second patin de frottement (12),
**caractérisé en ce que**
le premier mécanisme d'ajustement (50) est conçu pour déplacer le premier élément piston (34) vers le côté du rotor à disque par rapport au premier élément poussoir (33) jusqu'à ce que le premier patin de frottement (11) entre en contact avec le rotor à disque (10) à une pression de surface prédéterminée après avoir été déplacé vers le côté de rotor à disque d'une quantité correspondant au premier jeu, et **en ce que**
le second mécanisme d'ajustement (60) est conçu pour déplacer le second élément piston (77) vers le côté du rotor à disque par rapport au second élément poussoir (76) jusqu'à ce que le rotor à disque (10) entre en contact avec le second patin de frottement (12) à une pression de surface prédéterminée après avoir été déplacé vers le côté de second patin de frottement d'une quantité correspondant au second jeu.

2. Mécanisme d'ajustement de jeu selon la revendication 1, **caractérisé en ce que** le premier mécanisme d'ajustement (50) comprend :
des moyens d'entraînement de poussoir destinés à pousser le premier élément poussoir (33) dans la direction d'axe prédéterminé de sorte que le premier élément poussoir (33) et le premier élément piston (34) soient déplacés entièrement vers le côté de rotor à disque et pour entraîner le premier élément poussoir (33) en rotation lorsque les moyens d'entraînement de patin (20) sont activés ;
un premier organe de transmission (51, 52) qui est disposé entre le premier élément poussoir (33) et les moyens d'entraînement de poussoir (31) afin d'entraîner le premier élément poussoir (33) en rotation par la transmission d'une force d'entraînement rotative des moyens d'entraînement de poussoir (31) au premier élément poussoir (33) ;
des premiers moyens d'ajustement (54) destinés à exécuter un ajustement de sorte que la force d'entraînement rotative des moyens d'entraînement de poussoir (31) soit transmise au premier organe de transmission (51, 52) après que le premier élément poussoir (33) a été déplacé par les moyens d'entraînement de poussoir (31) vers le côté de rotor à disque conjointement au premier élément piston (34) d'une quantité correspondant au premier jeu ; et
un premier organe d'embrayage (57) qui bloque la transmission de la force d'entraînement rotative du premier organe de transmission (51, 52) au premier élément poussoir (34) lorsque le premier élément piston (34) entraîne le premier patin de frottement (11) en contact avec le rotor à disque (10) à la pression de surface prédéterminée ou plus, et
le second mécanisme d'ajustement (60) comprend :
un second organe de transmission (61, 62) qui transmet la force d'entraînement rotative du premier organe de transmission (51, 52) au second élément poussoir (76) ;
des seconds moyens d'ajustement (63) destinés à exécuter un ajustement de sorte que la force d'entraînement rotative du premier organe de transmission (51, 52) soit transmise au second organe de transmission (61, 62) après que le rotor à disque (10) a été poussé par le premier patin de frottement (11) vers le côté de second patin de frottement d'une quantité correspondant au second jeu ; et
un second organe d'embrayage (67) qui bloque la transmission de la force d'entraînement rotative du second organe de transmission (61, 62) au second élément poussoir (76) lorsque le premier patin de frottement (11) entraîne le rotor à disque (10) en contact avec le second patin de frottement (12) à la pression de surface prédéterminée ou plus.

3. Mécanisme d'ajustement de jeu selon la revendication 2, **caractérisé en ce que** les premier et second éléments poussoirs (33, 76) sont agencés pour être libres de tourner uniquement dans la direction de rotation au moyen d'embrayages unidirectionnels (57, 67) disposés respectivement sur les premier et second organes de transmission (51, 52 ; 61 ; 62).
